Europäisches Patentamt

European Patent Office

Office européen des brevets

(11) Veröffentlichungsnummer: **0 215 737**
**A2**

# (12) EUROPÄISCHE PATENTANMELDUNG

(21) Anmeldenummer: 86810397.9

(51) Int. Cl.⁴: **A 47 J 45/07**

(22) Anmeldetag: 03.09.86

(30) Priorität: 20.09.85 CH 4099/85

(43) Veröffentlichungstag der Anmeldung:
25.03.87 Patentblatt 87/13

(84) Benannte Vertragsstaaten:
CH DE FR GB IT LI SE

(71) Anmelder: **JORDAN AG für Beschichtungen**
**Therwilerstrasse 7**
**CH-4107 Ettingen/BL (CH)**

(72) Erfinder: **Probst, Herbert**
**Allmendstrasse 9**
**CH-4149 Metzerlen/SO (CH)**

(74) Vertreter: **Rossel, Albert, Dipl.-Ing. ETH**
**Postfach**
**CH-8023 Zürich (CH)**

(54) **Einrichtung zur Befestigung eines Griffes an ein Kochgeschirr.**

(57) An der Aussenwand einer Bratpfanne (1) ist ein hinter seinem Kopfende eine ringsumlaufende Nut (20) aufweisender Bolzen (2) angenietet.

Der Stielgriff (3) weist ein Sackloch (30) auf, in welchem der Klemmteil (4) fest angeordnet ist. Die Vorderkanten des Klemmteils sind zu Zungen (40) abgebogen, welche als Halteteile in die Nut (20) eingeschoben werden. Die ganze Befestigungseinrichtung ist durch eine Hülle (5) abgedeckt. Sie weist keine Schrauben auf und kann einfach hergestellt und montiert werden. Ein Lockern ist nicht möglich.

Fig.1

EP 0 215 737 A2

Bundesdruckerei Berlin

**Beschreibung**

Einrichtung zur Befestigung eines Griffes an ein Kochgeschirr

Die Erfindung betrifft eine Einrichtung gemäss Oberbegriff des Patentanspruches 1.

Kochgeschirre sind bei ihrer Benützung z.T. grossen Temperaturunterschieden ausgesetzt, was jeweils zu empfindlichen Massveränderungen im Material führt. Da das Grundmaterial der Kochgeschirre von demjenigen des daran befestigten Griffes abweicht, ergeben sich aus den differenten Wärmeausdehnungskoeffizienten Spannungen in der Befestigung des Griffes, was zur Lockerung dieser Befestigung führt, insbesondere wenn sie aus Schraub- oder Nietverbindungen besteht. Bei Verbindungen mittels axial oder schräg durch den Stielgriff reichenden Schrauben ist es bekannt, zur Verlängerung des Muttergewindes einen Block an die Aussenwand des Kochgeschirrs zu schweissen. Ein unsachgemässes Nachziehen der Schraube führt oft zu Beschädigungen an der Befestigung, wobei jedoch derartig befestigte Griffe ersetzbar sind.

In neuerer Zeit werden Kochgeschirre, insbesondere Bratpfannen verwendet, die auf ihrer Innenseite eine pflegeleichte, sich jedoch mit der Zeit abnützende Antihaftbeschichtung aufweisen, was ihre Lebensdauer beeinträchtigt.

Die erfindungsgemäss unabhängig von der Herstellung der Kochgeschirre erfolgende Fabrikation der Griffe ermöglicht eine Rationalisierung bzw. Verbilligung der Griffe und damit auch der mit Griffe versehenen Kochgeschirre.

Aufgabe der Erfindung ist eine Einrichtung, welche einen einfachen unkomplizierten Zusammenbau der separat und von verschiedenen Fabrikanten gefertigten Einzelteile zu einer starren und dauerhaften Befestigung ermöglicht.

Dies wird mit einer Einrichtung erreicht, welche die Merkmale des kennzeichnenden Teils des Patentanspruches 1 aufweist.

Der am Kochgeschirr angebrachte Ansatzteil weist Verbindungsmittel auf, die mit denjenigen eines Ansatzteils im Griff durch einfaches Aufsetzen eine starre, spielfreie, nicht unbedingt wieder lösbare Verbindung ergeben. Dabei weist der eine Verbindungsteil, z.B. der Bolzen, Ringnuten auf, in die abgebogene Zungen des anderen Verbindungsteils, z.B. des Griffes, einrasten. Vorteilhafterweise umfasst das Ende des Griffes den Verbindungsteil des Kochgeschirrs, wobei zwischen Kochgeschirr und Griff zusätzlich eine in radialer und axialer Richtung starr angeordnete Rohrhülle angebracht sein kann.

In der Zeichnung sind Ausführungsbeispiele der Erfindung dargestellt. Es zeigen

Fig. 1 einen Vertikalschnitt durch eine Bratpfanne mit erfindungsgemäss befestigtem stielartigem Griff,

Fig. 2 in grösserem Massstab den bolzenartigen Teil vor der Montage,

Fig. 3 in grösserem Massstab drei Ansichten des in den Griff einzusetzenden Klemmteils,

Fig. 4 einen Vertikalschnitt durch eine Variante der Einrichtung, und

Fig. 5 bis 9 je einen Querschnitt von Varianten nach der Linie A in Fig. 4.

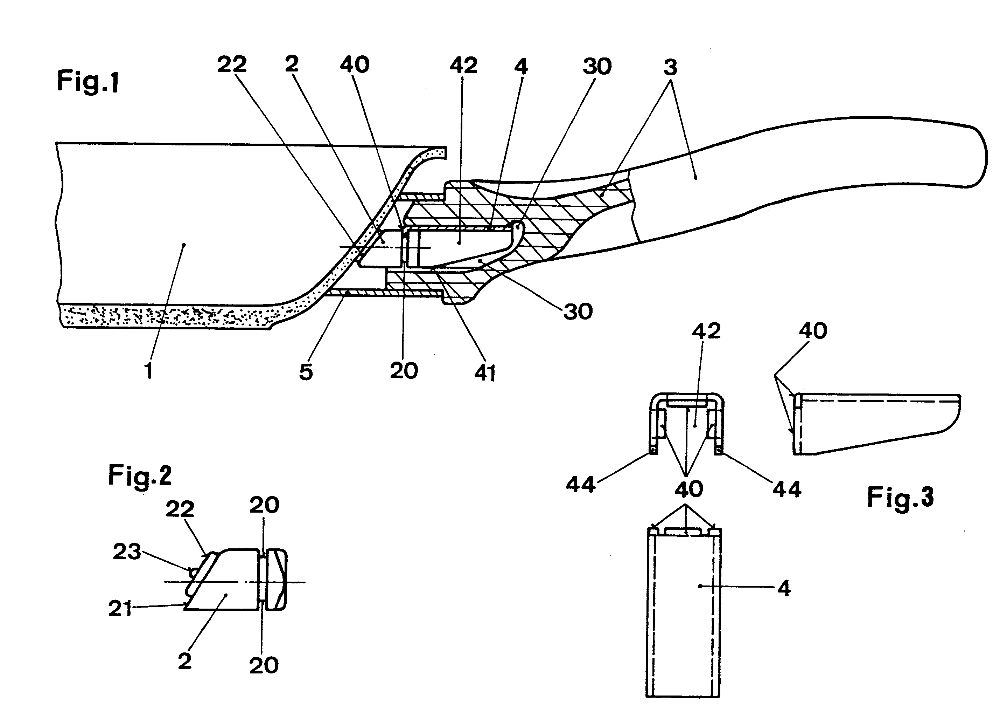

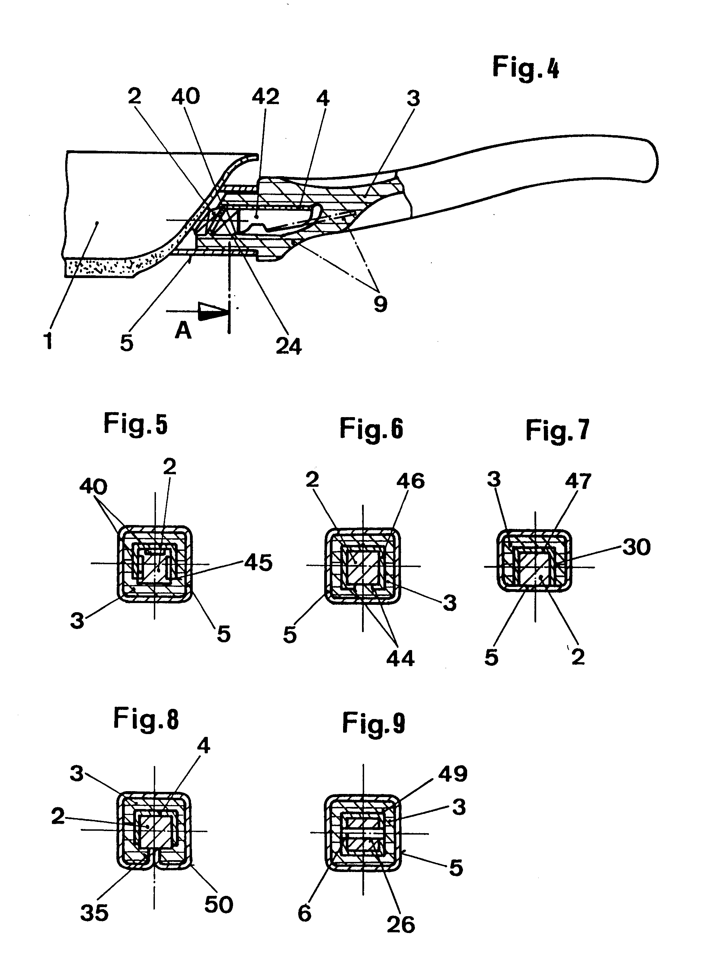

Bei den Varianten gemäss den Fig. 1 und 4 ist an der Aussenwand 1 ein nach aussen vorstehender, bolzenförmiger Teil 2 von vorzugsweise zylindrischer Form und kreisrundem oder quadratischem Querschnitt angenietet, dessen Fussfläche 21 mit einem Bund 22 und einer Niete 23 versehen ist. Durch eine Aenderung der Neigung der Fussfläche 21 ist die Schräglage des Stielgriffes 3 gegenüber der Wand des Kochgeschirrs einstellbar.

Der stielartige Griff 3 weist an seiner Ansteckseite eine sacklochartige Ausnehmung 30 mit eingestecktem Klemmteil 4 auf, dessen Befestigung 9 im Sackloch unabhängig ist von der Erfindung und erfahrungsgemäss von jedem Griffabrikanten anders ausgeführt wird.

Gemäss der Ausführungsvariante nach den Fig. 1 und 3 besteht der Klemmteil 4 aus einer U-förmigen Schiene. Am Steckteil des Klemmteils sind die Vorderkanten der beiden Seitenflächen und der Deckfläche abgebogen, wobei die sich durch das Abbiegen ergebenden, sich partiell über die Breite der Seiten- und Deckflächen erstreckenden Zungen 40 in die Nut 20 bzw. 24 des bolzenförmigen Teils 2 eingreifen und damit die Verbindung zwischen dem am Kochgeschirr befestigten Bolzen 2 und dem im Griff 3 angeordneten Klemmteil 4 bilden. Gemäss der Ausführung nach den Fig. 1 und 2 verläuft die Nut 20 in einer senkrecht zur Axe des Bolzens 2 stehenden Ebene.

Sofern, wie in der Zeichnung dargestellt, der Klemmteil 4 in Längsrichtung eine Offenseite aufweist, kann er mit seinen in der Nut 20 eingerasteten Zungen 40 radial über das Kopfende des Bolzens 2 geschoben werden.

Zur zusätzlichen Führung und zur Sicherung der Befestigung in radialer und axialer Richtung kann um den Befestigungsbereich eine starre Hülle 5 angebracht werden, welche als Abdeckung gegen das Eindringen von grobem Schmutz in den Bereich der Befestigungseinrichtung dient.

Die beschriebene Einrichtung dient der Befestigung eines Stielgriffes, vorzugsweise aus Kunststoff, an einem Kochgeschirr aus Metall, wie flache Bratpfanne, Kasserolle oder dgl.

Anstelle eines Bolzens als vorstehender Teil 2, auf den der Klemmteil 20 aufgeschoben wird, kann der Teil 2 aus einem eine Bohrung aufweisenden Körper, in welche Bohrung der Klemmteil 4 eingeschoben wird, bestehen. Die Verbindung kann auch über andere Verbindungsmittel erfolgen.

Der vorstehende Teil 2 kann am Kochgeschirr angenietet, mit Sicherheitsschrauben befestigt oder angeschweisst sein.

Die in den Fig. 4 bis 9 dargestellten Beispiele sind von ähnlichem Aufbau, mit folgenden Varianten gegenüber der beschriebenen Ausführung.

Bei der Variante gemäss Fig. 4 verläuft die rings um den Bolzen 2 führende Nut 24 in einer geneigt zur Axe des Bolzens liegenden Ebene. Entsprechend ist auch der Klemmteil 4, insbesondere dessen abgekröpfte Zungen 40, ausgebildet.

Bei der Variante gemäss den Fig. 3 und 5 umhüllt der Klemmteil 45 den Bolzen 2 auf drei Seiten. Mit 3 ist der Griff, mit 5 die Hülle bezeichnet.

Demgegenüber umhüllt der im Griff 3 eingebettete Klemmteil 36 in Fig. 6 den Bolzen 2 auf allen vier Seiten.

In der Variante gemäss Fig. 7 ist die Ausnehmung 30 für den Klemmteil 47 seitlich im Griff 3 angeordnet und wird von der Hülle 5 nach aussen verschlossen.

In der Variante gemäss Fig. 8 besteht die Hülle 50 aus einem Blech, dessen Kanten in einen Längsschlitz 35 des Griffes 3 eingeschoben sind.

In Fig. 9 erfolgt die Befestigung des Klemmteils 49 auf dem Bolzen 2 durch einen in eine Querbohrung 26 durch Klemmteil und Bolzen eingeschobenen Stift 6, dessen Lage durch den Griff 3 gesichert ist.

Die Befestigung zwischen Klemmteil und Bolzen kann auch mittels Sicken erfolgen.

Die beschriebenen Befestigungseinrichtungen sind unabhängig von der Art der Griffe und wirken sowohl in axialer, als auch in Drehrichtung (Rotation des Griffes), spielfrei.

Die Montage der Griffe an die Pfannen kann überall, d.h. anlässlich der Fabrikation oder erst beim Verkauf erfolgen. Der Bolzen 7 kann aus Aluminium und der durch die Ausnehmung 30 im Griff 3 und die Hülle 5 geführte Klemmteil 4 aus Chromnickelstahl bestehen, wobei sein Einbau in den Griff individuell, d.h. je nach Lieferant, erfolgen kann und die Führung durch die Ausnehmung 30 im Griff 3 und die Hülle 5 erfolgt. Ein Ersetzen eines event. defekten Griffes ist nicht vorgesehen. Gegebenenfalls muss der bereits montierte Griff zerstört werden.

**Patentansprüche**

1. Einrichtung zur starren Befestigung eines beliebigen Griffes, vorzugsweise Stielgriffes, aus Kunststoff, mit einbaubarem oder eingebautem Ansatzteil an ein an seiner Aussenwand starr befestigten, vorstehenden Bolzen aufweisendes Kochgeschirr, z.B. Kasserolle, flache Bratpfanne oder dgl., dadurch gekennzeichnet, dass im freien Endbereich des Bolzens (2) um im zugewandten Endbereich des Ansatzteils (4) bzw. Griffes (3) zusammenwirkende Verbindungsmittel (20, 24, 40) angeordnet sind, die eine starre Montage von Bolzen und Ansatzteil vor der Endmontage des Griffes (3) gewährleisten.

2. Einrichtung nach Anspruch 1, dadurch gekennzeichnet, dass der Bolzen (2) eine sich über mindestens einen Teil seines Umfanges erstreckende Teilringnut (20, 24) und der vorzugsweise hülsenförmige, event. einen Längsschlitz aufweisende Ansatzteil (4) einem dem Bolzenquerschnitt entsprechenden, in axialer Richtung des Griffes (3) verlaufenden, sacklochartigen Freiraum (42) aufweist, wobei mindestens ein Teil der Randkante dieses Freiraums mit abgebogenen oder abbiegbaren Zungen (40) versehen ist, deren Dicke und vorstehende Länge der Breite und der Tiefe der Nut (20, 24) entsprechen, so dass der Bolzen in den Freiraum des Ansatzteiles und die Zungen in die Nut des Bolzens einschiebbar sind, und dass der Griff so ausgebildet ist, dass er im montierten Zustand den Bolzen teilweise umfasst.

3. Einrichtung nach Anspruch 2, dadurch gekennzeichnet, dass die Teilringnut (20, 24) in einer senkrechten oder geneigten Ebene zur Axe des Bolzens (2) verläuft.

4. Einrichtung nach Anspruch 2 oder 3, dadurch gekennzeichnet, dass sowohl die Aussenform des Bolzens (2), als auch die Innenform des Ansatzteils (4) einen annähernd identischen rechteckigen oder quadratischen Querschnitt aufweisen.

5. Einrichtung nach Anspruch 4, dadurch gekennzeichnet, dass sich die Ringnut (20, 24) des Bolzens (2) über zwei oder drei Seiten erstreckt und die Endkanten des als Hülse ausgebildeten Ansatzteils (4) auf zwei oder drei Seitenkanten mindestens partiell abgebogen sind, wobei die abgebogenen Zungen (40) dazu bestimmt sind, in den Nutenring des Bolzens einzurasten (Fig. 3 und 5).

6. Einrichtung nach Anspruch 5, dadurch gekennzeichnet, dass bei sich über drei Seiten des Ansatzteils (4) erstreckenden abgebogenen Zungen (40), sein rechter und linker Seitenschenkel eine verlängerte Unterkante (44) aufweisen, welche um die vierte Seitenkante des Bolzens (2) abgebogen sind (Fig. 3 und 6).

7. Einrichtung nach Anspruch 4, dadurch gekennzeichnet, dass der hülsenförmige Ansatzteil (4) auf einer Seite einen Längsschlitz aufweist und die Schlitzkanten (44) die vierte Seitenfläche des Bolzens (2) zum Teil umfassen (Fig. 6).

8. Einrichtung nach Anspruch 1, dadurch gekennzeichnet, dass der Ansatzteil (4) eine Hülse ist, deren Innenquerschnitt dem Aussenquerschnitt des Bolzens (2) entspricht, wobei Bolzen und Hülse nach dem Ineinanderschieben durch einen querliegenden Stift (6) verankert sind (Fig. 9).

9. Einrichtung nach einem der Ansprüche 1 bis 8, dadurch gekennzeichnet, dass der Griff (3) in montiertem Zustand die Verbindungsmittel (2, 20, 24, 4, 40, 44), insbesondere die eingerasteten Zungen (40, 44) mindestens teilweise um- bzw. übergreift und sichert.

10. Einrichtung nach Anspruch 9, dadurch gekennzeichnet, dass in montiertem Zustand des Griffes (3), zwischen dem dem Kochgeschirr (1) zugewandten Griffende und der Kochgeschirrwand, eine in radialer und axialer Richtung starre Hülle (5) angeordnet ist.

11. Einrichtung nach einem der Ansprüche 1 bis 10, dadurch gekennzeichnet, dass der Bolzen (2) durch Nieten oder Schweissen mit dem Kochgeschirr (1) verbunden ist und der Fuss (21) des Bolzens gegenüber seiner Axe eine die gewünschte Schräglage des Griffes (3)

bestimmende Naigung aufweist.

**Fig.1**

22  2  40  42  4  30  3

30

1  5  20  41

**Fig.2**

22  20

23

21

2  20

**Fig.3**

42  40

44  44

40

4

8681 0397 9

86810397 9

**Fig.4**

2  40  42  4  3

1  5  A  24  9

**Fig.5**

40  2
3  45
5

**Fig.6**

2  46
5  3
44

**Fig.7**

3  47
30
5  2

**Fig.8**

3  4
2
35  50

**Fig.9**

49
3
5
6  26